(19) Europäisches Patentamt

European Patent Office

Office européen des brevets

(11) Veröffentlichungsnummer: **0 275 365 B1**

(12) **EUROPÄISCHE PATENTSCHRIFT**

(45) Veröffentlichungstag der Patentschrift: **02.01.92**

(51) Int. Cl.⁵: **B61D 17/22**, B60D 5/00

(21) Anmeldenummer: **87114881.3**

(22) Anmeldetag: **12.10.87**

(54) **Faltenbalg für Fahrzeugverbindungsdurchgänge.**

(30) Priorität: **10.10.86 DE 3634641**

(43) Veröffentlichungstag der Anmeldung:
**27.07.88 Patentblatt 88/30**

(45) Bekanntmachung des Hinweises auf die
Patenterteilung:
**02.01.92 Patentblatt 92/01**

(84) Benannte Vertragsstaaten:
**AT BE CH DE ES FR GB GR IT LI NL SE**

(56) Entgegenhaltungen:
**DE-A- 1 915 582
DE-A- 2 553 075
FR-A- 695 534
FR-A- 849 383**

(73) Patentinhaber: **HÜBNER Gummi- und Kunststoff GmbH
Agathofstrasse 15
W-3500 Kassel-Bettenhausen 1(DE)**

(72) Erfinder: **Huebner, Reinhard, Dipl.-Ing.,
Agathofstrasse 15,
W-3500 Kassel-Bettenhausen,(DE)**
Erfinder: **Koch, Robert
Schlesierstr. 2,
W-3437 Bad Sooden-Allendorf,(DE)**

(74) Vertreter: **Walter, Helmut, Dipl.-Ing.
Aubinger Strasse 81
W-8000 München 60(DE)**

## Beschreibung

Die Erfindung bezieht sich auf einen Faltenbalg aus in sich begrenzt zu längendem Material für den Übergang zwischen zwei aufeinander folgenden, gelenkig miteinander verbundenen Fahrzeugen, der einen Tunnel mit abgerundetem Rechteckquerschnitt bildet und Balgseitenwände, ein Balgdach sowie abgerundete Übergangsbereiche zwischen Balgdach und Balgseitenwänden einschließt und dessen Falten in den Balgwänden eine gleiche, geringe Höhe haben, während die Übergangsbereiche eine besondere Ausgestaltung haben.

Ein bekannter Faltenbalg mit diesen Merkmalen (CH-PS 346 909) geht davon aus, daß infolge der unterschiedlichen Krümmungsradien von Balgaußenseite und Balginnenseite im Bereich der abgerundeten Balgecken die Balgwand an der Balginnenseite Taschen ausbildet, in denen sich Schmutz und Wasser ansammelt, was zu Rißbildungen an diesen Stellen führt. Um dies zu vermeiden, ist der Faltenbalg im Bereich der abgerundeten Ecken mit einer Armierung versehen, die in einer oder zwei Richtungen elastisch ist, z.B. gewebt ist. Die Armierung soll den inneren "Faltengrad" unverändert lassen, den äußeren "Faltengrad" dagegen dehnen, wodurch am inneren Faltengrad keine Taschenbildung mehr auftritt. Der Faltenbalg ist also im Bereich der abgerundeten Ecken mit der Armierung in besonderer Weise ausgebildet, um eine Taschenbildung und einen vorzeitigen Verschleiß des Balges durch in solchen Taschen angesammelten Schmutz, durch Feuchtigkeit usw. zu verhindern.

Einem anderen gattungsgemäßen bekannten Faltenbalg (DE-PS P 26 17 931.7-09 ) liegt die Überlegung zugrunde, daß bei einem Faltenbalg aus einem selbst nur begrenzt zu längenden Material das Ausmaß der Längenänderung von der Höhe und der Zahl seiner Falten abhängig ist. Um die Bauhöhe solcher Falterbälge niedrig zu halten, wird angestrebt, den erforderlichen Auszug bei möglichst geringer Faltenhöhe zu erreichen. Eine möglichst geringe Bauhöhe ergibt auch eine gute Balgstabilität in den zur Auszugsrichtung senkrechten Richtungen. Dem Streben nach möglichst geringer Faltenhöhe waren jedoch bei den vorausgegangenen Balgkonstruktionen Grenzen gesetzt. Dies resultierte daher, daß zwar der Balg über seinen ganzen Umfang gleiche Faltenhöhe hatte, daß diese Faltenhöhe nicht aber über den ganzen Umfang des Balges in gleicher Weise ausgenutzt werden konnte. Die in der Praxis gewählte Faltenhöhe bestimmte sich insbesondere aus der begrenzten Auszugsfähigkeit der Falten in den abgerundeten Ecken des Balges, insbesondere bei kleinen Radien, obwohl dadurch die Auszugsfähigkeit der Falten an sich gar nicht voll genutzt werden konnte und obwohl diese in den übrigen Bereichen viel weitergehend, gegebenenfalls voll genutzt hätte werden können. Aufgabe dieser vorbekannten Lösung war die Ausgestaltung eines Faltenbalges der eingangs genannten Gattung in der Weise, daß durch einfache Maßnahmen die volle Auszugsfähigkeit der Falten des Balges in den maximal ausziehbaren Bereichen, also den Balgseiten Wänden, dem Balgdach und gegebenenfalls einem Balgboden, erreicht werden kann. Zur Lösung dieser Aufgabe ist die vorbekannte Lösung insbesondere dadurch gekennzeichnet, daß in Eckenbereichen des Faltenbalges zwischen je zwei aufeinanderfolgenden Falten gleicher Höhe mindestens eine zusätzliche Falte geringer Höhe eingelegt ist. Bei Anwendung dieser Erfindung ist es möglich, ohne Vergrößerung der Bauhöhe des Faltenbalges, diesen auf dem ganzen Umfang gleichmäßig zu längen, die Auszugsfähigkeit der Falten voll auszunutzen. Der Balg hat mit anderen Worten im Bereich der abgerundeten Balgecken die Auszugsfähigkeit wie sie im den Bereichen der beiden Balgseitenwände, des Balgdaches und gegenenfalls einem Balgboden von Haus aus alleine durch die normalen Falten gegeben ist. Insbesondere erhält der Faltenbalg aber auch Nachgiebigkeit, die für einen unbehinderten seitlichen Versatz der beiden Wagen, zwischen denen der Faltenbalg eingebaut ist, notwendig ist. Gemäß einer anderen Ausführungsform wird bei einem gattungsgemäßen Faltenbalg die gleiche Wirkung dadurch erzielt, daß zwischen zwei normalen Falten eine zusätliche Falte in sich geknickt ist.

Bekannt sind auch elastische Verbindungsbälge, deren Gewebeeinlagen in vulkanisierbare Elastomerbahnen eingebettet sind und aus einem grobmaschigen Gewebe bestehen, bei dem sich die Schußfäden in Querrichtung und die Kettfäden in Längsrichtung der Elastomer-Gewebebahn erstrecken, wobei die Kettfäden und/oder die Schußfäden der Gewebeeinlagen in den bogenförmigen Übergangsbereichen zwischen den Balgseitenwänden, und dem Balgdach sowie gegebenenfalls dem Balgboden einen gewellten, gestauchten und/oder gestreckten Verlauf haben (DE OS 30 35 159). Bei dieser Lösung besteht der Verbindungsbalg also aus einer glatten Materialbahn, die in sich dehnbar ist. Demzufolge ist die Länge der Elastomer-Gewebebahn mindestens auf etwa den halben Umfang des Verbindungsbalges abgestimmt, während ihre Breite der gestreckten Balglänge entspricht.

Damit liegen zwei grundsätzlich verschiedene Formen der Verbindungsbälge vor, die sich zwar darin gleichen, daß eine Gewebebahn beschichtet bzw. in ein gegebenenfalls in sich elastisches Material eingelegt ist, aber ansonsten grundverschieden sind, indem im einen Fall die Dehnbarkeit dadurch erreicht wird, daß die Materialbahn in Falten gelegt ist und im anderen Fall dadurch, daß eine glatte Materialbahn in sich entsprechend dehnbar ist. Auch in Berücksichtigung der besonderen Verhältnisse in den Übergangsbereichen sind beide Lösungen in sich konsequent, indem im Fall des Faltenbalges Zusatzfalten vorgesehen sind, während im Fall des Balges aus in sich elastischem Material durch Ausgestaltung der Gewebeeinlage ein unterschiedliches Dehnverhalten zum Bereich der Balgwände erreicht wird.

Die vorliegende Erfindung geht nun insofern gleichsam einen dritten Weg, indem sie eine Möglichkeit aufzeigt, wie das Prinzip des Faltenbalges mit seinen Vorteilen beibehalten werden kann, die in den Übergangsbereichen zwischen den Balgseitenwänden, dem Balgdach und gegebenenfalls dem Balgboden geforderte zusätzliche Dehnfähigkeit jedoch nicht im Rahmen des Faltenprinzips, d.h. durch Zusatzfalten, erreicht wird.

Der Erfindung liegt also die Aufgabe zugrunde, einen Verbindungsfaltenbalg der eingangs genannten Gattung so auszugestalten, daß durch einfache Maßnahmen, wozu nicht die Anwendung zusätzlicher Falten gehören soll, die volle Auszugsfähigkeit der Falten des Balges in den maximal ausziehbaren beiden Balgseitenwänden, dem Balgdach und gegebenenfalls dem Balgboden, und - in weiterer Ausgestaltung - die für den seitlichen Versatz der Fahrzeuge notwendige Nachgiebigkeit erreicht werden können.

Zur Lösung dieser Aufgabe werden erfindungsgemäß Balgeinsätze in den Übergangsbereichen vorgeschlagen, die mit den jeweils anschließenden Faltenbalgseitenwänden, dem Balgdach und gegebenenfalls dem Balgboden verbunden sind und ohne zusätzliche Falten in den Übergangsbereichen deutlich elastisch nachgiebiger sind als es der Fall wäre, wenn der Balg mit gleicher Faltenzahl und ohne besondere Maßnahmen über die Übergangsbereiche hinweggeführt würde. Die zusätzlichen Maßnahmen sollen also wie bei der bekannten Lösung mit Zusatzfalten die Begrenzung der Auszugsfähigkeit kompensieren, die durch den Übergang zwischen horizontale und vertikale Balgbereichen in den Faltenbalg hinein kommt.

Es liegt also bei der Erfindung entweder ein Faltenbalg vor, dessen Falten über den gesamten Balgumfang gleich sind, dessen Material aber in sich in den Seitenwandbereichen sowie Dach - und gegebenenfalls Bodenbereichen und in den Einsätzen verschieden ist, oder es liegt ein Faltenbalg vor, dessen Faltenverlauf im Übergangsbereich im Hinblick auf eine zusätzliche Versteifungswirkung verändert, gegebenenfalls sogar zum Verschwinden gebracht wird, wobei die notwendige Verformungsfähigkeit, im Bereich der Balgseitenwände, des Balgdaches sowie gegebenenfalls des Balgbodens allein durch die Falten, nicht aber durch die Nachgiebigkeit des Materials in sich erzielt wird, während in den Einsätzen die erforderliche Nachgiebbigkeit entweder teilweise durch die Falten und teilweise durch die Nachgiebigkeit des Materiales in sich oder allein durch die Nachgiebigkeit des Materiales in sich gegeben ist.

In den Ansprüchen 1 und 2 ist die Erfindung für zwei verschiedene Balggrundformen definiert, die sich darin gleichen, daß beide Grundformen zwei vertikale Balgseitenwände und ein oberes Balgdach aufweisen, während sie sich dadurch unterscheiden, daß sich der Anspruch 1 auf eine Grundform bezieht, die allein aus zwei Balgseitenwänden und dem Balgdach besteht, also einen unten offenen Tunnel bildet, während sich der Anspruch 2 auf eine Grundform bezieht, bei der die Seitenwände an ihren oberen Enden durch das Balgdach, am ihren unteren Enden durch einen Balgboden miteinander verbunden sind, also der Balg eine ringsum geschlossene Röhre bildet. Die Erfindung ist nachfolgend anhand der Zeichnung näher erläutert.

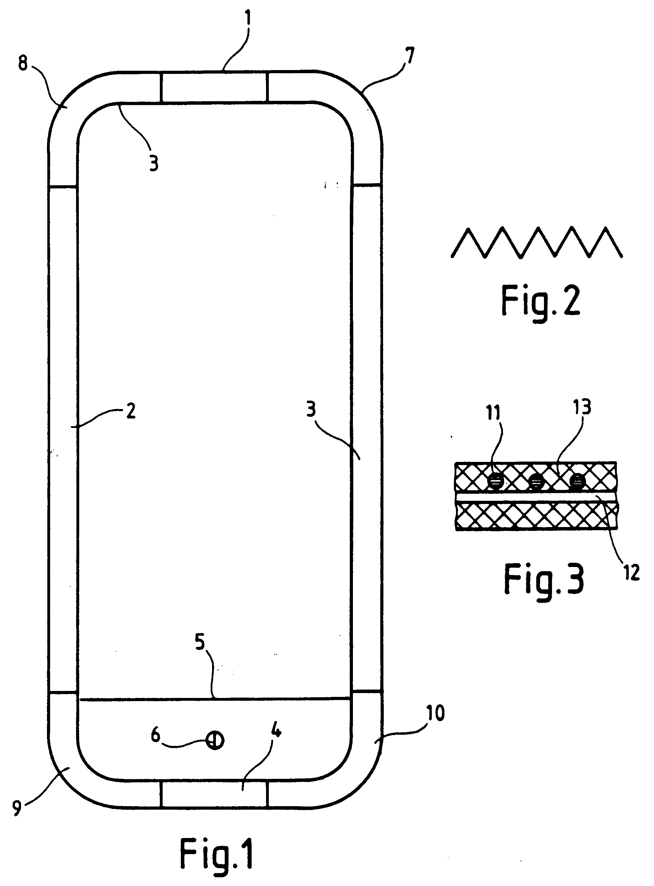

Der Faltenbalg bildet in bekannter Weise eine geschlossene Röhre mit dem Balgdach 1, den beiden vertikalen Balgseitenwänden 2,3 und dem Balgboden 4, wobei der Balgboden 4 in ebenfalls bekannter Weise entfallen kann, so daß die Balgseitenwände frei an den unteren Enden in Höhe einer Übergangsbrücke 5 enden (Fig. 1). Die so gebildete ringsum geschlossene Röhre bzw. der so gebildete unten offene Tunnel ist zwischen zwei gelenkig miteinander verbundenen Fahrzeugen angeordnet, die Schienen- oder Straßenfahrzeuge sein können. Ein Überwechseln zwischen den beiden Fahrzeugen ist Personen mittels der Übergangsbrücke 5 über der Kupplung 6 ermöglicht. Der Faltenbalg ermöglicht dieses Überwechseln geschützt gegen Wetter, Regen Staub und Fahrtwind. Die Kupplung 6 kann innerhalb oder außerhalb des vom Faltenbalg umschlossenen Bereiches liegen. Sie läßt Vertikalbewegungen, Horizontalbewegungen in Längs- und Querrichtung zwischen den beiden Fahrzeugen zu sowie die Bewegungen, die mit Rücksicht auf die Kurvenfahrt notwendig sind. Diese für den Fahrzeuglauf notwendigen Relativbewegungen zwischen den beiden Fahrzeugen sollen durch den Faltenbalg möglichst wenig behindert werden und der Faltenbalg soll durch solche Bewegungen möglichst wenig beansprucht werden. Dies ist alles an sich bekannt und nicht Gegenstand der Erfindung, wird bei ihr allerdings vorausgesetzt.

Ist nun der Faltenbalg auf seinem gesamten Umfang gleich ausgebildet, d.h. besteht er aus demselben Material, insbesondere beschichtetem Gewebe, und sind die Falten gleich ausgebildet, d.h. mit gleicher Faltentiefe sowie gleichbleibender Faltenteilung ringsumlaufend, so versteifen die abgerundeten Übergangsbereiche den Balg. Ein solcher Faltenverlauf ist in Fig. 2 als horizontaler Längsschnitt durch eine Seitenwand eines Faltenbalges gemäß Fig. 1 dargestellt. Hierdurch kann die aus den Falten in den Balgseitenwänden 2,3, dem Balgdach 1 und gegebenenfalls dem Balgboden 4 herrührende Nachgiebigkeit nicht genutzt werden. Die relativ geringe Verformbarkeit in den Übergangsbereichen zwischen den Seitenwänden und dem Dach sowie gegebenenfalls dem Boden bestimmt die Nachgiebigkeit des Balges insgesamt, was sich insbesondere dann auswirkt, wenn die beiden Fahrzeuge in Querrichtung gegeneinander versetzt werden.

Diese Versteifungswirkung ergibt sich bezüglich der Auszugsfähigkeit des Balges dadurch, daß die Falten regelmäßig an den äußeren Umkehrstellen durch Rahmen versteift sind, im Bereich der Außenkanten und in den Bereichen der Balgböden eine Radiusveränderung nicht möglich ist, die beim Ausziehen des Balges dann notwendige Radiusvergrößerung aber nur unzulänglich möglich ist.

Die Erfindung soll insbesondere diese Diskrepanz aufhaben und durch Ausgestaltung der Übergangsbereiche deren Nachgiebigkeit an die Nachgiebigkeit in Balglängsrichtung und in den Wandbereichen heranführen bzw. gleich bzw. zumindest weitgehend gleich machen.

Um diese zu ermöglichen, sind die Übergangsbereiche zunächst einmal als selbständige Einsätze 7,8 und gegebenenfalls 9,10 ausgebildet. Diese Einsätze sind andererseits so Balgseitenwänden und Balgdach bzw Balgboden eingesetzt, daß sie den Charakter des Balges als einstückiges Gebildet nicht aufheben. Sie können beispielsweise eingenäht und/oder eingeklebt sein.

Trotzdem unterscheiden sich die Einsätze von Balgseitenwänden, Balgboden und gegebenenfalls Balgboden erheblich, was nun eigentlich Gegenstand der Erfindung ist.

In einem ersten Fall sind die Einsätze in der gleichen Weise wie die Balgseitenwände gefaltet, sodaß sich der Balg äußerlich von herkömmlichen Bälgen kaum wahrnehmbar unterscheidet. Der Schnitt gemäß Fig.2 wäre also auch ein Schnitt im Bereich der Einsätze. Es sind allenfalls die Verbindungen zwischen den Balgseitenwänden und den Einsätzen erkannbar. Ansonsten laufen die Falten ohne Unterbrechung oder Veränderung ringsum. Das Material in den Balgseitenwänden, dem Balgdach und gegebenfalls Balgbodeneinerseits und den Einsätzen andererseits ist jedoch wesentlich verschieden.

Während das Balgmaterial in den Balgseitenwänden, dem Balgdach und gegebenenfalls Balgboden in den Bahnebenen praktisch nicht nachgiebig ist, also aus einem beschichteten Gewebe aus praktisch nicht zu längenden, gestreckten Fäden besteht, besteht das Balgmaterial in den Einsätzen aus einem Material, das in der Bahnebene zumindest bzw. vorzugsweise in einer Richtung elastisch verlängerbar ist.

Die Elastizität wird zunächst einmal durch ein entsprechendes Gewebe erreicht. Besteht das Gewebe in üblicher Weise aus Ketten- und Schußfäden (Fig. 3, einem Querschnitt durch eine Materialbahn), die sich unter einem Winkel von 90° kreuzen, so werden zumindest und vorzugsweise für die beim eingebauten Balg in dessen Umfangsrichtung verlaufenden Fäden in sich elastisch nachgiebige Fäden ausgewählt. Es kann aber auch ein an sich bekanntes Gewebe ein solches Gewebe ausgewählt werden, dessen bei eingebautem Balg in dessen Umfangsrichtung verlaufenden Fäden wellen-, zickzack- oder mäanderförmig verlaufen und so in ihrer Länge veränderbar sind. Sodann wird ein derart ausgewähltes, an sich bekanntes Gewebe 11,12 in einer Beschichtung 13 eingebettet, die die Verformbarkeit des Gewebes nicht behindert, gegebenenfalls die plastische Formveränderbarkeit des Gewebes in eine elastische Formveränderbarkeit der Materialbahn einbringt. In größter Annäherung an die bisher bei Faltenbälgen übliche Praxis wird das Gewebe beidseitig mit einer elastisch verformbaren Gummischicht belegt.

Das Ausmaß der gewollten Elastizität bestimmt sich aus dem Einsatzzweck. Generell soll gelten, daß die versteifende Wirkung, die sich aus der gebogenen Übergangskontur ergibt, aufgehoben werden soll. Die Übergangsbereiche sollen also durch die Elastizität des Materiales in gleicher Weise Längsbewegungen zwischen den beiden Fahrzeugen ermöglichen, wie die Balgwände, der Faltenbalg soll in den Übergangsbereichen nicht versteift sein, auch wenn sich die Faltenkontur und Faltenzahl der Balgwände in den Einsätzen wiederfindet.

Dies führt dazu, daß die für den Geslimtfaltenbalg notwendige Verformbarkeit in den Einsätzen sogar allein aus der elastischen Materialverformbarkeit glatter Bahnen gewonnen werden kann. Der Balg ist demzufolge nur in den Seitenwänden, im Dach und gegebenenfalls Boden als Faltenbalg ausgebildet, in den Übergangsbereichen dagegen glatt, was mit Rücksicht auf die in den Übergangsbereichen besonders große Gefahr der Verschmutzung, des Ansammelns und Vereisens von Wasser und dergl. wünschenswert sein kann.

Aus den beiden Varianten mit Einsätzen, die in gleicher Weise wie die Balgseitenwände, das Balgdach und gegebenenfalls der Balgboden gefaltet sind, und mit Einsätzen aus glattem Material läßt sich nun jede beliebige Variante ableiten, bei der die Einsätze mit einer geringeren Faltenzahl als die Balgseitenwände, das Balgdach und gegenenfalls der Balgboden versehen sind und durch Wahl der Elastizität des Materiales in sich, die gegenüber den Balgseitenwänden, dem Balgdach und gegebenenfalls dem Balgboden geringere Verformbarkeit in den Übergangsbereichen kompensiert wird.

In einfachster Auslegung soll die elastische Verformbarkeit der Materialbahn die Verformbarkeit aus der Faltung verdoppeln. Bei in gleicher Weise elastisch verformbaren Ketten- und Schußfäden kann dies durch eine Verdoppelung des Abstandes zwischen den in Balglängsrichtung verlaufenden Fäden erreicht werden.

In weiterer Ausgestaltung der Erfindung sollen Balgdach und gegebenenfalls Balgboden in gleicher Weise ausgebildet sein wie die Übergangsbögen. Dann ist der Balg nicht nur in Balglängsrichtung gut auszugsfähig, sondern er kann in extrem hohem Maße dem seitlichen Versatz der Fahrzeuge folgen, während die vertikal steifen Seitenwände eine gute vertikale Steifwirkung ergeben.

**Patentansprüche**

1. Faltenbalg aus in sich begrenzt zu längendem Material für den Übergang zwischen zwei aufeinanderfolgenden, gelenkig miteinander verbundenen Fahrzeugen, der einen Tunnel mit abgerundetem Rechteckquerschnitt bildet und Balgseitenwände (2,3), ein Balgdach (1) sowie abgerundete Übergangsbereiche zwischen Balgdach und Balgseitenwänden einschließt und dessen Falten in den Balgwänden eine gleiche, geringe Höhe haben, während die Übergangsbereiche (7,8) eine besondere Ausgestaltung haben, **dadurch gekennzeichnet,** daß die abgerundeten Übergangsbereiche besondere, mit den Balgseitenwänden und dem Balgdach verbundene Einsätze (7-10) sind, deren Material in Balgumfangsrichtung deutlich dehnfähiger ist als das Material der Balgseitenwände.

2. Faltenbalg nach Anspruch 1, **dadurch gekennzeichnet,** daß die Balgseitenwände (2,3) an den unteren Enden durch einen zum Balgdach (1) parallelen Balgboden (4) miteinander verbunden sind und die Übergangsbereiche (9,10) zwischen den Balgseitenwänden und dem Balgboden in gleicher Weise ausgebildet sind wie die Übergangsbereiche (7,8) zwischen Balgseitenwänden (2,3) und Balgdach (1).

3. Faltenbalg nach Anspruch 1 oder 2, **dadurch gekennzeichnet,** daß sowohl die Balgseitenwände (2,3) als auch das Balgdach (1) und gegebenenfalls der Balgboden (4) als auch die Einsätze (7-10) aus gummiertem Gewebe (11,12) bestehen, wobei jedoch die in Balgumfangsrichtung verlaufenden Gewebefäden in den Einsätzen (7-10) deutlich dehnfähiger sind als die entsprechenden Fäden in den Balgseitenwänden.

4. Faltenbalg nach Anspruch 3, **dadurch gekennzeichnet,** daß die Dehnfähigkeit der Gewebefäden, die in den Einsätzen (7-10) in Balgumfangsrichtung verlaufen, etwa doppelt so groß ist wie die Dehnfähigkeit der Gewebefäden, die in den Balgseitenwänden (2,3), dem Balgdach (1) und gegebenenfalls dem Balgboden (4) in Balgumfangsrichtung verlaufen.

5. Faltenbalg nach Anspruch 1 oder 2, **dadurch gekennzeichnet,** daß sowohl die Balgseitenwände (2,3) als auch das Balgdach (1) und gegebenenfalls der Balgboden (4) als auch die Einsätze aus gummiertem Gewebe mit in sich in gleicher Weise elastisch nachgiebigen Gewebefäden bestehen, wobei jedoch die in Balgumfangsrichtung verlaufenden Gewebefäden in den Einsätzen (7-10) einen wesentlich größeren Abstand voneinander haben als die gleichen Gewebefäden in den Balgseitenwänden, dem Balgdach (1) und gegebenenfalls dem Balgboden (4).

6. Faltenbalg nach Anspruch 1 oder 2, **dadurch gekennzeichnet,** daß Balgdach (1) und gegebenenfalls Balgboden (4) aus dem gleichen Material bestehen wie die Einsätze (7-10).

**Claims**

1. A communication bellows consisting of material having limited elongation, for the passage between two consecutive pivotally interconnected vehicles, such bellows forming a tunnel with rounded-off rectangular cross-section and enclosing bellows side walls (2, 3), a bellows roof (1), and rounded-off transition zones between the roof and the side walls, the bellows folds having the same short height in the walls while the transition zones (7, 8) have a special configuration, characterised in that the rounded-off transition zones are separate inserts (7 - 10) connected to the bellows side walls and the bellows roof, the material of the inserts being very much more extensible in the peripheral direction of the bellows than the material of the bellows side walls.

2. A communication bellows according to claim 1, characterised in that the bellows side walls (2, 3) are interconnected at the bottom ends by a bellows floor (4) parallel to the bellows roof (1) and the transition zones (9, 10) between the bellows side walls and the bellows floor are constructed in the same way as the transition zones (7, 8) between the bellows side walls (2, 3) and the bellows roof (1).

3. A communication bellows according to claim 1 or 2, characterised in that both the bellows side walls (2, 3) and the bellows roof (1) and, if required, the bellows floor (4), and also the inserts (7, 10) consist of rubberised fabric (11, 12), although the fabric yarns extending in the peripheral direction of the bellows in the inserts (7 - 10) are considerably more extensible than the corresponding yarns in the bellows side walls.

4. A communication bellows according to claim 3, characterised in that the extensibility of the fabric yarns extending in the peripheral direction of the bellows in the inserts (7 - 10) is substantially twice the extensibility of the fabric yarns extending in the peripheral direction of the bellows in the bellows side walls (2, 3), the bellows roof (1) and, if required, the bellows floor (4).

5. A communication bellows according to claim 1 or 2, characterised in that both the bellows side walls (2, 3) and the bellows roof (1) and, if required, the bellows floor (4), and also the inserts consist of rubberised fabric having fabric yarns which are of themselves elastically resilient in the same way, although the fabric yarns extending in the peripheral direction of the bellows in the inserts (7 - 10) are spaced much further apart than the same fabric yarns in the bellows side walls, the bellows roof (1) and, if required, the bellows floor (4).

6. A communications bellows according to claim 1 or 2, characterised in that the bellows roof (1) and, if required, the bellows floor (4) consist of the same material as the inserts (7 - 10).

**Revendications**

1. Soufflet en matériau à allongement limité pour le passage entre deux véhicules reliés l'un à l'autre par articulation, formant un tunnel à section transversale rectangulaire arrondie et comprenant des parois latérales de soufflet (2, 3), un toit de soufflet (1) ainsi que des zones de raccordement arrondies entre le toit et les parois latérales, les plis des parois du soufflet ayant une hauteur faible et constante tandis que les zones de raccordement (7, 8) ont une conformation particulière, caractérisé en ce que les zones de raccordement arrondies sont des garnitures particulières (7 à 10) assemblées avec les parois latérales de soufflet et le toit de soufflet, le matériau de ces garnitures étant nettement plus extensible en direction périphérique que le matériau des parois latérales de soufflet.

2. Soufflet selon la revendication 1, caractérisé en ce que les parois latérales (2, 3) du soufflet sont reliées l'une à l'autre à leurs extrémités inférieures par un plancher de soufflet (4) parallèle au boit de soufflet (1), les zones de raccordement (9, 10) entre les parois latérales de soufflet et le plancher de soufflet étant constituées de la même manière que les zones de raccordement (7, 8) entre les parois latérales de soufflet (2, 3) et le toit de soufflet (1).

3. Soufflet selon la revendication 1 ou 2, caractérisé en ce que les parois latérales de soufflet (2, 3) ainsi que le toit de soufflet (1) et, le cas échéant, le plancher de soufflet (4) ainsi que les garnitures (7 à 10) sont constitués en tissu caoutchouté (11, 12), les fils du tissu des garnitures (7 à 10) s'étendant dans la direction périphérique du soufflet étant cependant nettement plus extensibles que les fils correspondants des parois latérales de soufflet.

4. Soufflet selon la revendication 3, caractérisé en ce que l'extensibilité des fils du tissu des garnitures (7 à 10) s'étendant dans la direction périphérique du soufflet est sensiblement deux fois plus grande que l'extensibilité des fils du tissu s'étendant en direction périphérique dans les parois latérales de soufflet (2, 3), le toit de soufflet (1) et, le cas échéant, le plancher de soufflet (4).

5. Soufflet selon la revendication 1 ou 2, caractérisé en ce que les parois latérales de soufflet (2, 3) ainsi que le toit de soufflet (1) et, le cas échéant, le plancher de soufflet (4) ainsi que les garnitures sont constitués en tissu caoutchouté avec des fils de tissu qui, en soi, se déforment élastiquement de la même façon, les fils du tissu des garnitures (7 à 10) qui s'étendent dans la direction périphérique du soufflet présentant cependant entre eux une distance essentiellement plus grande que les mêmes fils de tissu s'étendant dans les parois latérales de soufflet, dans le toit de soufflet (1) et, le cas échéant, dans le plancher de soufflet (4).

6. Soufflet selon la revendication 1 ou 2, caractérisé en ce que le toit de soufflet (1) et, le cas échéant, le plancher de soufflet (4) sont constitués du même matériau que les garnitures (7 à 10).

Fig.1

Fig.2

Fig.3